# EUROPÄISCHE PATENTSCHRIFT

(11) **EP 0 906 633 B1**
(45) Veröffentlichungstag und Bekanntmachung des Hinweises auf die Patenterteilung: **15.12.1999**
(21) Anmeldenummer: 97931635.3
(22) Anmeldetag: 18.06.1997
(51) Int. Cl.: H01H 1/58, H01R 31/08

(54) **SCHALTKONTAKTSYSTEM EINES NIEDERSPANNUNGS-LEISTUNGSSCHALTERS MIT BIEGSAMEN LEITERN**
SWITCHING CONTACT SYSTEM FOR A LOW VOLTAGE POWER SWITCH WITH FLEXIBLE CONDUCTORS
SYSTEME DE CONTACT DE COMMUTATION D'UN SECTIONNEUR DE PUISSANCE DE BASSE TENSION A CONDUCTEURS FLEXIBLES

(30) Priorität: 21.06.1996 DE 19626467
(43) Veröffentlichungstag der Anmeldung: 07.04.1999
(73) Patentinhaber: SIEMENS AKTIENGESELLSCHAFT, 80333 München (DE)
(72) Erfinder: TÜRKMEN, Sezai, D-13629 Berlin (DE)
(86) Internationale Anmeldenummer: DE9701290
(87) Internationale Veröffentlichungsnummer: WO9750102

(56) Entgegenhaltungen:
- EP-A- 0 527 472
- CH-A- 656 986
- DE-A- 4 416 104

## Beschreibung

Die Erfindung betrifft ein Schaltkontaktsystem eines Niederspannungs-Leistungsschalters mit einer Stromschiene und an der Stromschiene befestigten seilförmigen biegsamen Leitern zur Verbindung der Stromschiene mit einem bewegbaren Schaltkontakt.

Schaltkontaktsysteme der genannten Art sind in unterschiedlichen Ausführungen bekannt. Beispielsweise werden nach der US 4 583 065 biegsame Leiter in Ausnehmungen einer Stromschiene durch ein Preßschweißverfahren, d. h. ohne Zufuhr von Lotmetall, befestigt.

Nach der US 4 922 068 ist demgegenüber vorgesehen, die Enden von seilförmigen biegsamen Leitern zunächst unter Zugabe eines Lotmetalles zu verdichten und dann diese verdichteten Enden gleichfalls unter Zufuhr eines Lotmetalles mit der Stromschiene zu verbinden. Dabei werden die verdichteten Enden der biegsamen Leiter zusammen mit einem Abschnitt eines folienartigen Lotmetalles auf die Stromschiene aufgelegt, wobei ein Stift oder Niet zur vorübergehenden Fixierung der Teile dient.

Ferner ist es bekannt, biegsame Leiter mit einer Stromschiene unter Vakuum mittels eines Elektronenstrahles zu verschweißen. Durch eine geeignete Gestaltung der Schweißstelle ist hierdurch zu erreichen, daß die Wärmeeinwirkung auf einen kleinen Bereich beschränkt bleibt und hierdurch die elastischen Eigenschaften der biegsamen Leiter erhalten bleiben (US 5 093 988 A). Dies ist wesentlich für die Lebensdauer der Schaltkontaktanordnung.

Um für alle Bemessungsströme einer Baureihe von Leistungsschaltern möglichst das gleiche Halbzeug verwenden zu können, ist es bekannt, einen als geeignet ausgewählten Typ eines biegsamen Leiters einheitlich zu verwenden und die Anpassung an den gewünschten Bemessungsstrom durch die Anzahl von Abschnitten dieses Leiters vorzunehmen. Daher können Schaltkontaktsysteme für höhere Bemessungsströme nicht nur mehrere biegsame Leiterseile aufweisen, die in einer Reihe angeordnet sind, sondern mehrere parallele Reihen solcher Leiterseile. Nach der WO 95/28724 kann diese große Anzahl biegsamer Leiter durch ein Elektronenstrahl-Schweißverfahren mit der Stromschiene verbunden werden. Hierzu ist ein mit verringertem Querschnitt ausgebildeter Endteil der Stromschiene mit einer den insgesamt benötigten biegsamen Leitern entsprechenden Anzahl von Bohrungen versehen, in welche passend kalibrierte Enden der biegsamen Leiter eingesteckt werden. Die Schweißung erfolgt dann in der Weise, daß der Elektronenstrahl über die stirnseitigen, etwa bündig mit der Stromschiene positionierten Enden der biegsamen Leiter geführt wird.

Unabhängig davon, welches der verschiedenen bekannten Löt- oder Schweißverfahren angewandt wird, erfordert die Vorbereitung der Lötung oder Schweißung zumindest dann den größeren Teil der gesamten Arbeitskosten, wenn die Zahl der biegsamen Leiter groß ist und mehrere parallele Reihen solcher Leiter benötigt werden. In diesem Fall muß nämlich eine entsprechend große Zahl von Ausnehmungen oder Bohrungen zur Aufnahme der biegsamen Leiter spanabhebend hergestellt werden.

Der Erfindung liegt hiervon ausgehend die Aufgabe zugrunde, die Herstellung von Schaltkontaktanordnungen mit einer Vielzahl von biegsamen Leitern zu vereinfachen.

Gemäß der Erfindung wird diese Aufgabe dadurch gelöst, daß die biegsamen Leiter zwischen einer Verbindungsfläche der Stromschiene und einem mit der Stromschiene verbundenen Endstück aufgenommen sind, daß das Endstück an der Verbindungsfläche der Stromschiene mit wenigstens einer Berührungsfläche anliegt und daß die Stromschiene, das Endstück und die biegsamen Leiter durch Wärmeeinwirkung unlösbar miteinander verbunden sind.

Das Endstück ermöglicht es, von der bisher erforderlichen Bearbeitung der Stromschiene zur Herstellung von Ausnehmungen oder Löchern abzusehen. Vielmehr können diese Merkmale dem Endstück zugewiesen sein, das als vergleichsweise kleines Teil nach anderen und rationeller durchführbaren Verfahren bearbeitet werden kann, als die vergleichsweise großen Stromschienen. Vor allem ist es möglich, das Endstück als Standardbauteil auszubilden, das für Stromschienen verschiedener Abmessungen und auch in mehrfacher Anordnung verwendbar ist, wenn biegsame Leiter in der bekannten mehrreihigen Anordnung (WO 95/28724) benötigt werden. In diesem Fall können mehrere Endstücke aneinandergesetzt werden, die dann durch das gewählte Löt- oder Schweißverfahren miteinander und mit der Stromschiene verbunden werden.

Zur Vereinfachung der Herstellung der Schaltkontaktsysteme kann im Rahmen der Erfindung dadurch beigetragen werden, daß das Endstück wenigstens an seiner der Stirnfläche der Stromschiene zugewandten Seite Ausnehmungen entsprechend der Anzahl biegsamer Leiter aufweist. Diese Maßnahme vereinfacht die Positionierung der biegsamen Leiter und macht unter Umständen besondere Vorrichtungen zur Positionierung entbehrlich.

Soll zur Verbindung der Stromschienen mit dem Endstück und den biegsamen Leitern ein Schweißverfahren benutzt werden, so kann dies mittels folgender Verfahrensschritte erfolgen:
- Positionierung der Stromschiene, der biegsamen Leiter und des Endstückes in einer Stellung, in der Endflächen der biegsamen Leiter mit angrenzenden Flächen der Stromschiene des Endstücke miteinander fluchten,
- Richten eines energiereichen Strahles auf die genannten Endflächen und die genannten angrenzenden Flächen mit einer zum Ausschmelzen des Werkstoffes der genannten Teile ausreichenden Stärke,
- Führen des Strahles entlang seiner Bahn, welches die Endflächen aller biegsamen Leiter und der genannten angrenzenden Bereiche der Stromschiene und des Endstückes erfaßt, bis die biegsamen Leiter mit der Stromschiene und dem Endstück unlösbar verbunden sind.

Als energiereicher Strahl kann dabei in bekannter Weise ein Elektronenstrahl oder ein Laserstrahl benutzt werden.

Wie bereits erwähnt, eignet sich die Schaltkontaktanordnung nach der Erfindung grundsätzlich für die Anwendung von Schweiß- oder Lötverfahren. Nachstehend werden Abwandlungen beschrieben, die sich speziell auf Lötverfahren beziehen.

Insbesondere kann ein Lötvorgang dadurch erheblich vereinfacht werden, daß an der Verbindungsfläche der Stromschiene und/oder der zugewandten Seite des Endstückes wenigstens eine Ausnehmung zur Aufnahme eines Lotmetallstückes angeordnet ist. Die Anwendung solcher Lotmetallstücke, die zugleich vorübergehend die Aufgabe einer Positionierung von Teilen wahrnehmen können, ist an sich bekannt. Beispielsweise ist eine Anwendung von Lotmetallstücken bei der Herstellung von Vakuumschaltröhren durch die DE 93 19 945 U1 bekanntgeworden. Für die Zwecke der Erfindung erweist es sich dabei als vorteilhaft, wenn das Lotmetallstück in der gleichen Anordnung wie das Endstück mit Ausnehmungen zur Aufnahme der biegsamen Leiter versehen ist.

Die Verbindung der Stromschiene mit den biegsamen Leitern unter Verwendung eines oder mehrerer Endstücke kann durch Löten mittels folgender Schritte erfolgen:
- die Stromschiene der biegsamen Leiter und das Endstück werden mit gegenseitigem Abstand positioniert,
- in die Nut der Stromschiene und in die Nut des Endstückes wird wenigstens je ein Lotmetallstück eingelegt,
- der Abstand der Stromschiene und des Endstückes wird somit verringert, daß eine durchgehend elektrisch leitende Anordnung entsteht,
- es wird ein Stromkreis unter Verwendung einer Stromquelle und der genannten elektrisch leitenden Anordnung gebildet,
- durch die genannte elektrisch leitende Anordnung wird ein Strom solcher Höhe und Dauer geleitet, daß die Lotmetallstücke schmelzen und die Stromschiene, die biegsamen Leiter und das Endstück unlösbar miteinander verbunden werden.

Es gibt mehrere Gesichtspunkte, die bei der Anordnung bzw. Grundform der biegsamen Leiter zu beachten sind. Insbesondere können die biegsamen Leiter eine mehr oder weniger von der geradlinigen Verbindung der Kontakthebel und der Stromschiene abweichende Grundform aufweisen, um ein kleineren oder größeren Schwenkwinkel des bewegbaren Schaltkontaktes ohne unzulässige Beanspruchung der biegsamen Leiter zu gestatten. Auch kann es zweckmäßig sein, die biegsamen Leiter in Schleifenform anzuordnen, um Stromkräfte auszunutzen. Im Rahmen dieser Anforderungen kann es erwünscht sein, daß die Richtung der biegsamen Leiter relativ zu der Längsrichtung der Stromschiene unterschiedlich wählbar ist, insbesondere - bei einer als normal angenommenen horizontalen Lage der Stromschiene- nach oben, nach unten oder horizontal weiterführend. Alle diese Anordnungen sind nach einer Weiterbildung der Erfindung mittels einheitlicher und multifunktional gestalteter Teile dadurch erzielbar, daß am Ende der Stromschiene zur Bildung von zwei rechtwinklig zueinander stehenden Verbindungsflächen eine Stufe mit gleicher Höhe und Tiefe angeordnet ist und daß das vorstehend bereits näher erläuterte Endstück ein rechtwinkliges Profil mit Kanten aufweist, von denen wenigstens die eine Kante der Höhe bzw. Tiefe der Stufe angepaßt ist.

Nimmt man zunächst an, daß die Stromschiene mit nach oben weisender Stufe angeordnet ist, so können die biegsamen Leiter je nach der Lage des Endstückes nach oben oder in der Längsrichtung der Stromschiene weiterführend gerichtet sein. Wird die Stromschiene mit nach unten weisender Stufe montiert, so ist neben der horizontal weiterführenden Stellung der biegsamen Leiter auch eine nach unten weisende Stellung möglich.

Die beschriebenen unterschiedlichen Stellungen der biegsamen Leiter relativ zu der Stromschiene sind mittels einheitlicher Teile auch dann zu verwirklichen, wenn mit der Stromschiene mehr als eine Reihe von biegsamen Leitern zu verbinden ist. Dies kann im Rahmen der Erfindung durch eine solche Bemessung der Kantenlängen des Profiles des Endstückes erreicht werden, daß zwei oder mehrere gleiche Endstücke einander zu einer den Abmessungen der Stufe entsprechenden quadratischen Querschnittsform ergänzen.

Die Erfindung wird im folgenden anhand der in den Figuren veranschaulichten Ausführungsbeispiele näher erläutert.

Die Figur 1 zeigt schematisch in perspektivischer Darstellung einen dreipoligen Niederspannungs-Leistungsschalter.

In der Figur 2 ist ein Schnitt durch den Leistungsschalter gemäß der Figur 1 im Bereich eines Schaltkontaktsystems dargestellt.

Die Figuren 3 und 4 betreffen ein besonders für Schweißverfahren geeignetes Ausführungsbeispiel und zeigen eine Stromschiene mit einem angefügten Endstück und mit biegsamen Leitern in einer Seitenansicht bzw. in der Draufsicht. Die Erweiterung der gezeigten Anordnung durch weitere Endstücke ist strichpunktiert angedeutet.

Die Figur 5 zeigt in einer perspektivischen Darstellung ein Endstück für das Ausführungsbeispiel gemäß den Figuren 3 und 4.

Die Figur 6 zeigt ein Ausführungsbeispiel für ein Lötverfahren in einer Seitenansicht mit einer Stromschiene und mit zwei angefügten Endstücken sowie Lotmetallstücken.

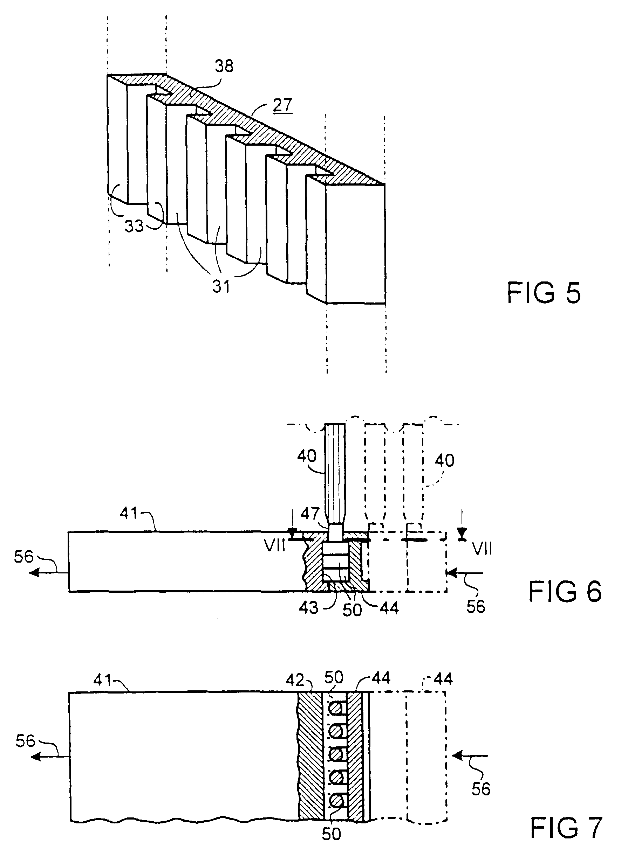

Die Anordnung gemäß der Figur 6 ist in der Figur 7 in einer teilweise geschnittenen Draufsicht (Schnitt VII-VII in Figur 6) dargestellt.

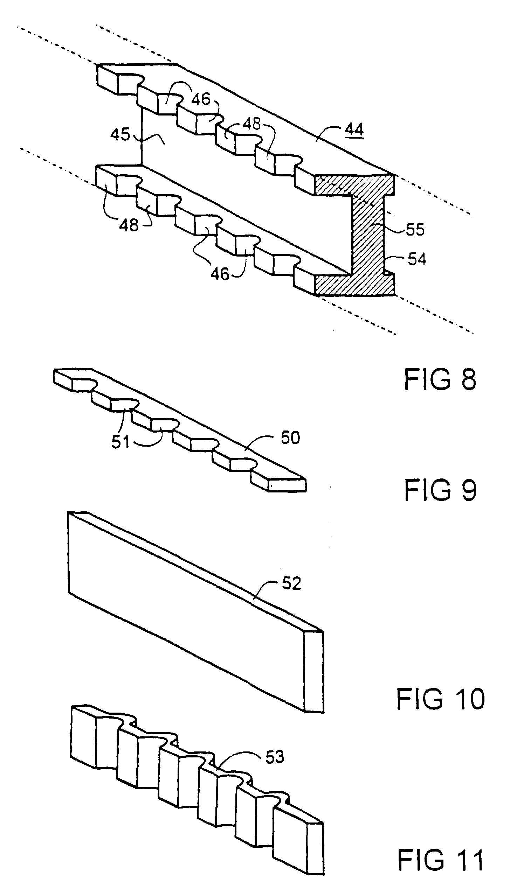

In einer der Figur 5 entsprechenden Darstellung zeigt die Figur 8 ein Endstück für das Ausführungsbeispiel gemäß den Figuren 6 und 7.

Lotmetallstücke in unterschiedlichen Ausführungen zeigen die Figuren 9, 10 und 11.

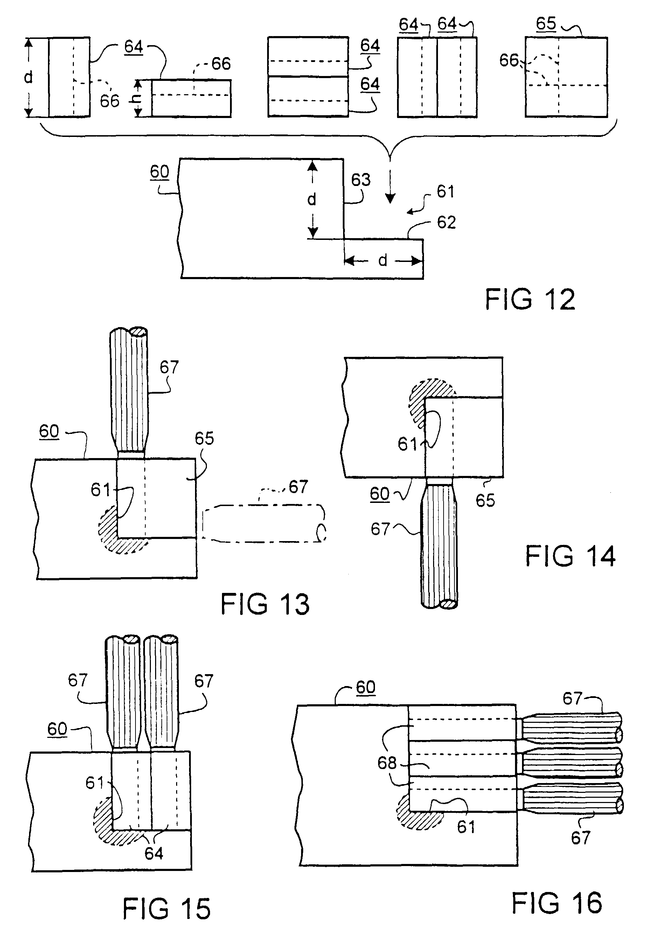

Die Figur 12 zeigt in abgebrochener Darstellung eine Stromschiene mit einer Stufe zur Bildung von zwei rechtwinklig zueinander stehenden Verbindungsflächen zur Anbringung biegsamer Leiter sowie mehrere Beispiele für an die Stufe angepaßte Endstücke und Kombinationen von Endstücken.

Die Figuren 13 und 14 zeigen bei jeweils horizontaler Lage einer Stromschiene eine nach oben, horizontal weiterführend bzw. nach unten weisende Anordnung biegsamer Leiter.

Die Figur 15 veranschaulicht eine Kombination von zwei Endstücken zu einer insgesamt quadratischen Querschnittform zwecks Verbindung von zwei Reihen nach oben weisender biegsamer Leiter mit einer Stromschiene.

Als weiteres Beispiel zeigt die Figur 16 eine Kombination von drei Endstücken zu einer quadratischen Querschnittsform und eine hierdurch ermöglichte Verbindung von drei Reihen von biegsamen Leitern mit einer Stromschiene.

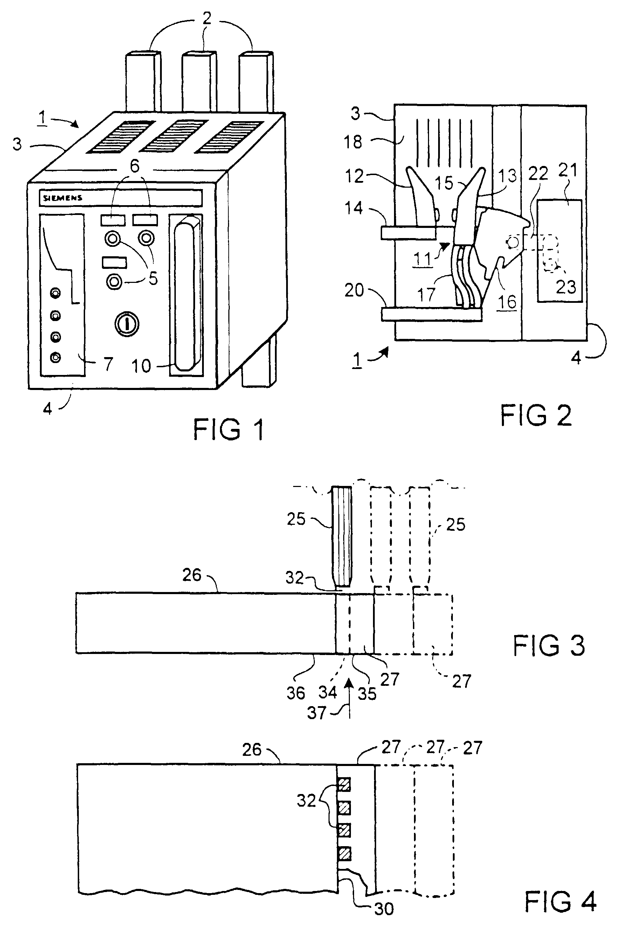

Der in der Figur 1 gezeigte Niederspannungs-Leistungsschalter 1 ist dreipolig ausgebildet und steht über rückseitig angeordnete und daher in der Figur 1 nicht sichtbare Stromschienen mit vertikalen Schienenleitern 2 in Verbindung. Der Leistungsschalter 1 weist ein Gehäuse 3 mit einem frontseitigen Bedienpult 4 auf. In der Mitte des Bedienpultes 4 befinden sich Drucktaster 5 für die Steuerung der EIN- und AUS-Schaltung sowie Anzeigeorgane 6, welche die Schaltstellung und den Zustand eines Energiespeichers anzeigen. Den linken Teil des Bedienpultes 4 nimmt ein elektronischer Auslöser 7 ein, während an der rechten Seite des Bedienpultes 4 ein Aufzugshebel 10 zum Spannen des erwähnten Energiespeichers von Hand angeordnet ist.

Jeder der Pole des Leistungsschalters 1 weist gemäß der Figur 2 ein Schaltkontaktsystem 11 auf, zu dem ein feststehender Schaltkontakt 12 und bewegbarer Schaltkontakt 13 gehören. Der feststehende Schaltkontakt 12 steht mit einer oberen Stromschiene 14 in Verbindung, die in der schon erwähnten Weise an der Rückseite des Leistungsschalters 1 aus dem Gehäuse 3 herausragt und mit einem weiterführenden Schienenleiter (z. B. Schienenleiter 2 in Figur 1) verbunden sein kann. Der bewegbare Schaltkontakt 13 umfaßt einen oder mehrere Kontakthebel 15, die an einem Kontaktträger 16 schwenkbar angebracht und durch biegsame Leiter 17 mit einer unteren Stromschiene 20 verbunden sind, die gleichfalls aus dem Gehäuse 3 herausragt. Der Kontaktträger 16 ist in nicht näher dargestellter Weise in dem Gehäuse 3 schwenkbar gelagert und ist durch eine Antriebsvorrichtung 21 mittels einer Koppelstange 22 derart betätigbar, daß der bzw. die Kontakthebel 15 an den feststehenden Schaltkontakt 12 anlegbar oder von diesem trennbar ist bzw. sind. Eine zu der Antriebsvorrichtung 21 gehörende Schaltwelle 23 ist für alle Pole des Leistungsschalters 1 gemeinsam. Oberhalb des Schaltkontaktsystems 11 befindet sich eine Lichtbogenlöschkammer 18.

Die Verbindung der biegsamen Leiter mit der unteren Anschlußschiene kann unterschiedlich ausgebildet sein, wie im folgenden näher beschrieben wird. Zunächst wird anhand der Figuren 3, 4 und 5 eine für das Laserstrahlschweißen oder das Elektronenstrahlschweißen geeignete Ausführung erläutert.

Wie die Figuren 3 und 4 zeigen, sind biegsame Leiter 25 mit einer Stromschiene 26, die als untere Stromschiene 20 in der Figur 2 verwendbar ist, mittels eines Endstückes 27 verbunden. Die Breite und Höhe des Endstückes 27 entsprechen der Stromschiene 26. Die Stromschiene 26 weist eine ebene Verbindungsfläche 30 auf (Figur 4), während das Endstück 27 Ausnehmungen 31 (vgl. Figur 5) zur Aufnahme etwa quadratisch kalibrierter Enden 32 der biegsamen Leiter 25 besitzt. Die zwischen den Ausnehmungen 30 verbleibenden Bereiche bilden Berührungsflächen 33, mit denen das Endstück 27 an die Verbindungsfläche 30 der Stromschiene 26 anzulegen ist.

Durch eine geeignete Wärmeeinwirkung werden die Stromschiene 26, das Endstück 27 und die biegsamen Leiter 25 miteinander unlösbar verbunden. Dies geschieht ausgehend von der in den Figuren 3 und 4 gezeigten Stellung, in der Endflächen 34 der biegsamen Leiter 25 mit einer angrenzenden Fläche 35 des Endstückes 27 und einer anschließenden Fläche 36 der Stromschiene 26 miteinander fluchten. Zur vorübergehenden Positionierung der genannten Teile in der gewünschten Stellung kann eine Haltevorrichtung benutzt werden. Da geeignete Haltevorrichtungen an sich bekannt sind, wird von einer näheren Beschreibung abgesehen. Die Wärmeeinwirkung erfolgt vorzugsweise unter Benutzung eines energiereichen Strahles der bereits erwähnten Art, der in der Figur 3 durch einen Pfeil 37 angeordnet ist, um die beschriebenen Teile miteinander zu verschweißen.

Wie in der Figur 4 strichpunktiert angedeutet ist, kann bei - Bedarf ein weiteres Endstück 27 an ein bereits vorhandenes Endstück 27 angefügt werden, um eine weitere Reihe von biegsamen Leitern mit der Stromschiene 26 zu verbinden. Dabei wird es zweckmäßig sein, zuerst die gesamte gewünschte Anordnung von biegsamen Leitern 25 und Endstücken 27 in einer Vorrichtung zusammenfügen und dann in einem zusammenhängenden Vorgang die Wärmeeinwirkung vorzunehmen.

Die Endstücke 27 stellen Abschnitte eines profilierten Halbzeuges dar, wie in der Figur 5 durch strichpunktierte Ecklinien und eine schraffierte Schnittfläche 38 angedeutet ist. Die zur Aufnahme der kalibrierten Enden 32 der biegsamen Leiter 25 dienenden Ausnehmungen 31 werden dabei durch die Rillen oder Nuten eines gewalzten oder stranggepreßten Profiles ohne spanabhebende Bearbeitung gebildet. Somit können Endstücke 27 in einer der Dicke der Stromschiene 26 angepaßten Abmessung jeweils durch einen einzigen Trennschnitt (z. B. Stanzen, Sägen oder ähnliches Verfahren) von dem Halbzeug abgeteilt werden.

Das weitere Ausführungsbeispiel gemäß den Figuren 6 und 7 ist speziell an die Anwendung eines Lötverfahrens angepaßt. Wie die Figuren 6 und 7 zeigen, sind biegsame Leiter 40 an einer Stromschiene 41 befestigt, die eine Verbindungsfläche 42 mit einer Nut 43 aufweist. Auch in einem näher aus der Figur 8 ersichtlichen Endstück 44 ist eine entsprechende Nut vorgesehen. Rechtwinklig zu der Nut 45 erstrecken sich in der Figur 8 gezeigte Ausnehmungen 46, in denen zylindrisch kalibrierte Enden 47 der biegsamen Leiter 40 aufgenommen werden. Die Ausnehmungen 46 sind hierzu an die Querschnittsform der Enden 47 angepaßt. Die zwischen den Ausnehmungen 46 verbleibenden Flächen bilden Berührungsflächen 48 zur Anlage an der Verbindungsfläche 42 der Stromschiene 41. Die Zuführung des zum Löten benötigten Lotmetalles erfolgt durch Lotmetallstücke 50, die bei der Vorbereitung der Anordnung gemäß den Figuren 6 und 7 in die Ausnehmungen 43 und 45 eingelegt werden. Dabei Ist die Höhe der Ausnehmungen 43 und 45 durch insgesamt drei verschachtelt eingelegte Lotmetallstücke 50 ausgefüllt. Bei einer abweichenden Dicke der Lotmetallstücke 50 kann die Anzahl größer oder kleiner sein.

Wie näher die Figur 9 zeigt, sind die Lotmetallstücke 50 als kammartige Stanzteile mit Ausschnitten 51 ausgebildet. Jedoch ist das Lötverfahren auch mit einem ebenen Lotmetallstück 52 gemäß der Figur 10 ausführbar oder mit einem der Anordnung der biegsamen Leiter 40 und der Ausnehmung 46 in dem Endstück 44 angepaßten gewellten Lotmetallstück 53.

Zur Vergrößerung der beim Löten entstehenden Bindefläche zwischen der Stromschiene 41, den biegsamen Leitern 40 und dem Endstück 44 kann die Nut 45 (Figur 8) mit einer geringeren und insbesondere an die Ausnehmungen 46 angepaßten Tiefe ausgeführt sein. Ferner kann die Höhe der Nut 45 im Verhältnis zur Höhe des Endstückes 44 abweichend von der Figur 8 gewählt werden.

Wie der Figur 8 ferner zu entnehmen ist, weist das Endstück 44 an seiner den Ausnehmungen 46 gegenüberliegenden Seite eine Nut 54 auf, die der Nut 43 der Stromschiene 41 entspricht. Auf diese Weise können weitere Reihen biegsamer Leiter 40 mit der Stromschiene 41 verbunden werden, wie dies in den Figuren 6 und 7 strichpunktiert angedeutet ist. Es ist zweckmäßig, zur Herstellung von Endstücken 44 gleichfalls ein profiliertes Halbzeug zu verwenden, das in diesem Fall die Nuten 45 und 54 auf der ganzen Länge aufweist. Die benötigten Teilstücke werden durch Abtrennen von Teilstücken von dem Halbzeug gefertigt, wie dies in der Figur 8 durch eine schraffierte Schnittfläche 55 angedeutet ist. Die Ausnehmungen 46 werden an dem Halbzeug oder an den einzelnen Endstücken durch ein übliches Bearbeitungsverfahren wie Stanzen oder Fräsen hergestellt.

Die Wärmezufuhr zum Löten kann bei der Anordnung gemäß den Figuren 6 und 7 durch Hindurchleiten eines Stromes geeigneter Größe entsprechend den Pfeilen 56 erfolgen. In bekannter Weise ist die erforderliche Temperatur durch die Auswahl des Lotmaterials zu beeinflussen. Für die vorzugsweise aus Kupfer bestehenden Stromschienen, Endstücke und biegsamen Leiter sind silberhaltige Lotmaterialien gut geeignet, wobei der Schmelzpunkt durch den Silbergehalt zu beeinflussen ist. Durch den Andruck zur Kontaktierung benutzter Elektroden kann im Fall der Verwendung ebener Lotmetallstücke 52 eine Umformung zur Anpassung an die Anordnung der biegsamen Leiter 40 erfolgen.

Bei den vorstehend erläuterten Ausführungsformen wurde jeweils angenommen, daß sich biegsame Leiter rechtwinklig zu einer Stromschiene nach oben erstrecken. Es kann aber aus unterschiedlichen Gründen erwünscht sein, die biegsamen Leiter mit einer hiervon abweichenden Richtung mit einer Stromschiene zu verbinden. Anhand der Figuren 12 bis 16 werden nun Anordnungen beschrieben, die dies mit einheitlichen Teilen ermöglichen. Grundlage dieses Prinzips ist eine Stromschiene 60, die am Ende mit einer Stufe 61 versehen ist. Die Höhe und die Tiefe der Stufe 61 sind gleich und weisen ein Maß d auf. Hierdurch werden zwei rechtwinklig zueinander stehende Verbindungsflächen 62 und 63 zur Anbringung biegsamer Leiter gebildet. Zwei unterschiedliche Endstücke 64 und 65 sind oberhalb der Stufe 61 einzeln und miteinander kombiniert sowie in unterschiedlichen Stellungen dargestellt.

Die in der Figur 12 gezeigten Endstücke 64 und 65 besitzen ein rechtwinkliges Profil mit zwei Kanten, von denen wenigstens die eine das Maß d der Stufe 61 aufweist. Die verbleibende Kante weist bei dem Endstück 64 ein Maß h auf, das kleiner als das Maß d ist und einen ganzzahligen Bruchteil entsprechend der Beziehung d=n*h darstellt. Daher lassen sich zwei oder mehrere Endstücke 64 so zusammenfügen, daß die Stufe 61 ausgefüllt wird.

Das weitere Endstück 65 besitzt ein quadratisches Profil mit der Kantenlänge d, so daß die Stufe 61, gleich in welcher Stellung des Endstückes 65, stets ausgefüllt wird. Die Lage von Ausnehmungen 66 zur Aufnahme biegsamer Leiter ist jeweils gestrichelt angedeutet. Auf diese Weise ist eine rechtwinklige Stellung eines biegsamen Leiters 67 nach oben gemäß der Figur 13 oder eine strichpunktiert angedeutete, die Richtung der Stromschiene 60 fortsetzende Stellung zu erzielen. Wird die Stromschiene 60 umgedreht montiert, d.h. mit nach unten offener Stufe 61, so ergibt sich die in der Figur 14 gezeigte nach unten weisende Stellung des biegsamen Leiters 67.

Werden entsprechend der Figur 12 Endstücke 64 verwendet, die sich zu der quadratischen Querschnittsform mit dem Maß d zusammensetzen lassen, so können auch zwei Reihen biegsamer Leiter ähnlich den Figuren 3 und 4 sowie 6 und 7 mit der Stromschiene 60 verbunden werden. Als Beispiele hierfür zeigt die Figur 15 die Benutzung von zwei Endstücken 64 und die Figur 16 die Benutzung von drei Endstücken 68. Dabei erlauben die Anordnungen gemäß den Figuren 15 und 16 die gleichen Abwandlungen der Position der biegsamen Leiter 67 wie diese in den Figuren 13 und 14 für jeweils eine Reihe biegsamer Leiter veranschaulicht wurde.

## Patentansprüche

1. Schaltkontaktsystem (11) eines Niederspannungs-Leistungsschalters (1) mit einer Stromschiene und an der Stromschiene (20, 26, 41) befestigten seilförmigen biegsamen Leitern (17, 25, 40) zur Verbindung der Stromschiene (20, 26, 41) mit einem bewegbaren Schaltkontakt (13),
**dadurch gekennzeichnet**, daß die biegsamen Leiter (17, 25, 40) zwischen einer Verbindungsfläche (30, 42) der Stromschiene (26, 41) und einem mit der Stromschiene (26, 41) verbundenen Endstück (27, 44) aufgenommen sind, daß das Endstück (27, 44) an der Verbindungsfläche (30, 42) der Stromschiene (26, 41) mit wenigstens einer Berührungsfläche (33, 48) anliegt und daß die Stromschiene (26, 41), das Endstück (27, 44) und die biegsamen Leiter (25, 40) durch Wärmeeinwirkung (37, 55) unlösbar miteinander verbunden sind.

2. Schaltkontaktsystem nach Anspruch 1,
**dadurch gekennzeichnet**, daß das Endstück (27, 44) wenigstens an seiner der Verbindungsfläche (30, 42) der Stromschiene (26, 41) zugewandten Seite Ausnehmungen (31, 46) entsprechend der Anzahl biegsamer Leiter (25, 40) aufweist.

3. Verfahren zur Herstellung eines Schaltkontaktsystems nach Anspruch 1 oder 2,
**gekennzeichnet durch** folgende Schritte:
- Positionierung der Stromschiene (26), der biegsamen Leiter (25) und eines Endstückes (27) in einer Stellung, in der Endflächen (34) der biegsamen Leiter (25) mit angrenzenden Flächen (35, 36) der Stromschiene (26) und des Endstückes (27) miteinander fluchten,
- Richten eines energiereichen Strahles (37) auf die genannten Endflächen (34) und die genannten angrenzenden Flächen (35, 36) mit einer zum Aufschmelzen des Werkstoffes der genannten Teile ausreichenden Stärke,
- Führen des Strahles (37) entlang einer Bahn, welche die Endflächen (34) aller biegsamen Leiter (25) und der genannten angrenzenden Flächen der Stromschiene (26) und des Endstückes (27) erfaßt, bis die biegsamen Leiter (25) mit der Stromschiene (26) und dem Endstück (27) unlösbar verbunden sind.

4. Schaltkontaktsystem nach Anspruch 1 oder 2,
**dadurch gekennzeichnet**, daß an der Verbindungsfläche (42) der Stromschiene (41) und/oder der zugewandten Seite des Endstückes (44) wenigstens eine Nut (43, 45) zur Aufnahme eines Lotmetallstückes (50, 52, 53) angeordnet ist.

5. Schaltkontaktsystem nach Anspruch 4,
**dadurch gekennzeichnet**, daß das Lotmetallstück (50, 53) mit Ausschnitten (51) zur Aufnahme der biegsamen Leiter (40) entsprechend der Anordnung von Ausnehmungen (46) am Endstück (44) versehen ist.

6. Verfahren zur Herstellung eines Schaltkontaktsystems nach Anspruch 4 oder 5,
**gekennzeichnet durch** folgende Schritte:
- die Stromschiene (41), die biegsamen Leiter (40) und das Endstück (44) werden mit gegenseitigem Abstand positioniert,
- in die Ausnehmung (43) der Stromschiene (41) und in die Ausnehmung (45) des Endstückes (44) wird wenigstens je ein Lotmetallstück (50, 51, 52) eingelegt,
- der Abstand der Stromschiene (41) und des Endstückes (44) wird soweit verringert, daß eine durchgehend elektrisch leitende Anordnung entsteht,
- es wird ein Stromkreis unter Verwendung einer Stromquelle und der genannten elektrisch leitenden Anordnung gebildet,
- durch die elektrisch leitende Anordnung wird ein Strom (56) solcher Höhe und Dauer geleitet, daß die Lotmetallstücke (50, 51, 52) schmelzen und die Stromschiene (41), die biegsamen Leiter (40) und das Endstück (44) unlösbar miteinander verbunden werden.

7. Schaltkontaktsystem nach einem der Ansprüche 1 bis 6,
**dadurch gekennzeichnet**, daß
am Ende der Stromschiene (60) zur Bildung von zwei rechtwinklig zueinander stehenden Verbindungsflächen (62, 63) eine Stufe (61) mit gleicher Höhe und Tiefe (d) angeordnet ist und daß das Endstück (64, 65, 68) ein rechtwinkliges Profil mit Kanten aufweist, von denen wenigstens die eine Kante der Höhe und der Tiefe (d) der Stufe (61) angepaßt ist.

8. Schaltkontaktsystem nach Anspruch 7,
**gekennzeichnet durch** eine Bemessung der Länge der Kanten des Profiles des Endstückes (64, 68) derart, daß zwei oder mehrere gleiche Endstücke (64) einander zu einer der Abmessung der Stufe (61) entsprechenden quadratischen Querschnittsform ergänzen.

## Claims

1. Switch contact system (11) of a low-voltage circuit-breaker (1) with a busbar and rope-like conductors (17, 20, 25, 40) attached to the busbar (20, 26, 41) for connecting the busbar (20, 26, 41) to a moveable switch contact (13),
**characterised in that** the flexible conductors (17, 25, 40) are accommodated between a bonding face (30, 42) of the busbar (26, 41) and an end piece (27, 44) joined to the busbar (26, 41), that the end piece (27, 44) abuts the bonding face (30, 42) of the busbar (26, 41) with at least one contact face (33, 48) and that the busbar (26, 41), the end piece (27, 44) and the flexible conductor (25, 40) are permanently bonded together by the action of heat (37, 55).

2. Switch contact system according to Claim 1,
**characterised in that** the end piece (27, 44) has recesses (31, 46) according to the number of flexible conductors (25, 40), at least on its side facing the bonding face (30, 42) of the busbar (26, 41).

3. Process for manufacturing a switch contact system according to Claim 1 or 2,
**characterized by** the following steps:
- positioning the busbar (26), the flexible conductors (25) and an end piece (27) in a position in which the end faces (34) of the flexible conductors (25) are flush with adjacent faces (35, 36) of the busbar (26) and of the end piece (27),
- directing a high-energy beam (37) onto said end faces (34) and said adjacent faces (35, 36) with an intensity that is sufficient to fuse the materials of said parts,
- guiding the beam (37) along a path which includes the end faces (34) of all flexible conductors (25) and said adjacent faces of the busbar (26) and of the end piece (27) until the flexible conductors (25) are permanently bonded to the busbar (26) and to the end piece (27).

4. Switch contact system according to Claim 1 or 2,
**characterised in that** at least one slot (43, 45) for receiving a piece of solder metal (50, 52, 53) is arranged at the bonding face (42) of the busbar (41) and/or of the facing side of the end piece (44).

5. Switch contact system according to Claim 4,
**characterised in that** the piece of solder metal (50, 53) is provided with cut-outs (51) to receive the flexible conductors (40) according to the arrangement of recesses (46) in the end piece (44).

6. Process for manufacturing a switch contact system according to Claim 4 or 5,
**characterised by** the following steps:
- the busbar (41), the flexible conductors (40) and the end piece (44) are positioned with mutual spacing,
- at least one piece of solder metal (50, 51, 52) is placed in each case in the slot (43) of the busbar (41) and in the slot (45) of the end piece (44),
- the spacing of the busbar (41) and the end piece (44) is reduced until a continuous electrically conducting arrangement is produced,
- a circuit is formed by using a power source and said electrically conducting arrangement,
- a current (56) is passed through the electrically conducting arrangement, that is of such intensity and duration that the pieces of solder metal (50, 51, 52) melt and the busbar (41), the flexible conductors (40) and the end piece (44) are permanently bonded together.

7. Switch contact system according to one of Claims 1 to 6,
**characterised in that** in order to form two bonding faces (62, 63) at right-angles to each other, a step (61) having an equal height and depth (d) is arranged at the end of the busbar (60) and that the end piece (64, 65, 68) has a right-angled profile with edges, of which at least one edge is matched to the height and the depth (d) of the step (61).

8. Switch contact system according to Claim 7,
**characterised by** dimensions of the length of the edges of the profile of the end piece (64, 68) that are such that two or more equal end pieces (64) add up to a square cross-sectional shape corresponding to the dimensions of the step (61).

## Revendications

1. Système (11) de contact de commutation d'un disjoncteur (1) de basse tension comprenant un rail de contact et des conducteurs (17, 25, 40) souples et en forme de câble fixés sur le rail de contact (20, 26, 41) en vue de relier le rail de contact (20, 26, 41) à un contact (13) de commutation mobile, caractérisé en ce que les conducteurs (17, 25, 40) souples sont reçus entre une surface (30, 42) de liaison du rail (26, 41) de contact et un embout (27, 44) relié au rail de contact (26, 41), en ce que l'embout (27, 44) s'applique à la surface de liaison (30, 42) du rail de contact (26, 41) par au moins une surface de contact (33, 48) et en ce que le rail de contact (26, 41), l'embout (27, 44) et les conducteurs (25, 40) souples sont reliés les uns aux autres de manière indissoluble par action de la chaleur (37, 55).

2. Système (11) de contact de commutation suivant la revendication 1, caractérisé en ce que l'embout (27, 44) comporte, au moins du côté tourné vers la surface de liaison (30, 42) du rail de contact (26, 41), des évidements (31, 46) en nombre correspondant à celui des conducteurs (25, 40) souples.

3. Procédé de fabrication d'un système de contact de commutation suivant la revendication 1 ou 2, caractérisé par les stades suivants :
- mise du rail de contact (26) des conducteurs (26) souples et d'un embout (27) en une position dans laquelle des surfaces d'extrémité (34) des conducteurs (25) souples sont à affleurement avec des surfaces (35, 36) adjacentes du rail de contact (26) et de l'embout (27),
- envoi d'un faisceau (37) riche en énergie sur lesdites surfaces (34) d'extrémité et lesdites surfaces (35, 36) adjacentes d'une intensité suffisante pour faire fondre le matériau desdites parties,
- guidage du faisceau (37) le long d'une voie, qui prend les surfaces (34) d'extrémité de tous les conducteurs (25) souples et lesdites surfaces adjacentes du rail de contact (26) et de l'embout (27), jusqu'à ce que les conducteurs (25) souples soient reliés de manière indissoluble au rail de contact (26) et à l'embout (27).

4. Système de contact de commutation selon la revendication 1 ou 2, caractérisé en ce qu'il est prévu sur la surface (42) de liaison du rail de contact (41) et/ou du côté de l'embout (44) tourné vers le rail de contact, au moins une gorge (43, 45) de réception d'une pièce (50, 52, 53) de métal de brasure.

5. Système de contact de commutation suivant la revendication 4, caractérisé en ce que la pièce (50, 53) de métal de brasure est munie de découpes (51) de réception des conducteurs (40) souples conformément à la position des évidements (46) ménagés dans l'embout (44).

6. Procédé de fabrication d'un système de contact de commutation suivant la revendication 4 ou 5, caractérisé par les stades suivants :
- on met le rail de contact (41) des conducteurs (40) souples et l'embout (44) en position mutuelle,
- on met dans l'évidement (43) du rail de contact (41) et dans l'évidement (45) de l'embout (44) respectivement au moins une pièce (50, 51, 52) de métal de brasure,
- on diminue la distance entre le rail de contact (41) et l'embout (44) jusqu'à ce qu'il se produise un agencement continu conducteur de l'électricité,
- il est formé un circuit de courant électrique en utilisant une source de courant et ledit agencement conducteur de l'électricité,
- par l'agencement conducteur de l'électricité, on envoie un courant (56) électrique d'une intensité et d'une durée telles que les pièces (50, 51, 52) de métal de brasure fondent et que le rail de contact (41), les conducteurs (40) souples et l'embout (44) sont reliés les uns aux autres de manière indissoluble.

7. Système de contact de commutation suivant l'une des revendications 1 à 6, caractérisé en ce qu'à l'extrémité du rail de contact (60), il est prévu à l'extrémité du rail de contact (60) en vue de former deux surfaces (62, 63) de liaison à angle droit l'une par rapport à l'autre, un épaulement (61) de même hauteur et de même profondeur (d) et en ce que l'embout (64, 65, 68) a un profil rectangulaire avec des arêtes dont l'une au moins est adaptée à la hauteur et à la profondeur (d) de l'épaulement (61).

8. Système de contact de commutation suivant la revendication 7, caractérisé par une longueur des arêtes du profilé de l'embout (64, 68) telle que deux ou plusieurs embouts (64) identiques se complètent en une forme de section transversale carrée correspondant à la dimension de l'épaulement (61).
